# EUROPEAN PATENT APPLICATION

(11) **EP 0 613 796 A1**
(43) Date of publication of application: **07.09.1994**
(21) Application number: 94870040.6
(22) Date of filing: 04.03.1994
(51) Int. Cl.: B60H 1/00

(54) **Air-conditioned bus**

(30) Priority: 05.03.1993 BE 9300216
(71) Applicant: VAN HOOL, naamloze vennootschap, B-2500 Koningshooikt (BE)
(72) Inventor: Hendrickx, Lucas R.M., B-2930 Brasschaat (BE)
(74) Representative: Donné, Eddy

(57) **Abstract**

Air-conditioned bus which comprises at least an air channel (3) mounted against or in the roof (1) and provided with at least an air inlet opening (10, 11) and at least an air outlet opening (21) for leading air to the inside of the bus, which bus comprises in this air channel (3), between the air inlet opening (10, 11) and the air outlet opening (21), at least a ventilator (5) an a heat exchanger (7), characterized in that the bus is equipped with air-conditioning units (4), in other words local installations which allow that locally air is taken away which is then led to the mutual air channel (3) extending in the longitudinal direction of the bus, whereby these local air-conditioning units (4) are formed by a local inlet channel (16, 17) which extends transversally with respect to said air channel (3) , and at least one upright internal channel (12), which connects with its upper extremity to said inlet channel (16, 17) and with its lower extremity to said air channel (3), in which the ventilator (5), which is an axial ventilator, and the heat exchanger (7) are mounted above each other.

## Description

The invention relates to an air-conditioned bus which comprises at least an air channel mounted against or in the roof and provided with at least an air inlet opening and at least an air outlet opening for leading air to the inside of the bus, which bus comprises between the air inlet opening and the air outlet opening, at least a ventilator and a heat exchanger.

Because of limitations in building space and the higher demands concerning air-conditioning, it is more and more preferred to mount the air channel with the ventilator and the heat exchanger in or against the roof instead of on the floor.

In known air-conditioned buses with the air channel in or against the roof, use is made of one or more radial ventilators and one or more compact heat exchangers. Radial ventilators, which blow the air away radially, can be very compact, are relatively noiseless in use and cause a limited air delivery at high lifts. This offers a great liberty in lay-out of the components in the air channel. The relatively high air speeds, however, lead to a relatively high air resistance with the compact heat exchangers, which results in a high power consumption of the ventilators.

Due to the limited air delivery of the radial ventilators, also large temperature differences can occur between the conditioned air which is blown in the inside of the bus, and this inside.

In the French patent application No. 2.608.103 it has been disclosed to use axial ventilators which are mounted between a first longitudinal channel, which is in communication with the open air by means of openings, and a second longitudinal channel, which is in communication with the inside of the bus by means of openings.

However, the construction disclosed in FR 2.608.103 presents several disadvantages. A first major disadvantage consists in that, because the air is sucked in through a longitudinal channel, this air will turbulate, which will lead to energy losses and noise nuisance.

A second disadvantage consists in that, due to the fact that use is made of a longitudinal channel for sucking in the air, this channel does not leave room for mounting other accessories.

Another disadvantage consists in that the construction as disclosed in FR 2.608.103 requires a interruption in the roof construction in the longitudinal direction, this weakening the entire coachwork of the bus.

The invention aims at remedying these disadvantages.

To this end, the invention relates to an air-conditioned bus which comprises at least an air channel mounted against or in the roof and provided with at least an air inlet opening and at least an air outlet opening for leading air to the inside of the bus, which bus comprises in this air channel, between the air inlet opening and the air outlet opening, at least a ventilator and a heat exchanger, characterized in that the bus is equipped with air-conditioning units, in other words local units which allow that locally air is taken away which is then led to the mutual air channel extending in the longitudinal direction of the bus, whereby these local air-conditioning units are formed by a local inlet channel which extends transversally with respect to said air channel, and at least one upright internal channel, which connects with its upper extremity to said inlet channel and with its lower extremity to said air channel, in which the ventilator, which is an axial ventilator, and the heat exchanger are mounted above each other.

The use of such local air-conditioning units offers the advantage that little or no turbulence occur in the sucked in air, as this air is led from the suction place directly to the concerned ventilator, without passing a longitudinal channel.

The use of such local air-conditioning units also offers the advantage that the skeleton of the bus need not be weakened, as such unit can always be mounted in such a place that no profiles need to be interrupted.

The use of such air-conditioning units also offers the advantage that many possibilities exist to mount other equipment between the air-conditioning units. Moreover, such air-conditioning units allow that they can be placed on the most advantageous place in function of other equipment to be mounted, for instance in function of the place of doors, elements to indicate the drive, etc.

The air inlet opening can be an inlet opening for open air.

This open air inlet opening can be mounted in the roof as well as in the side wall of the bus.

The air inlet opening can also be in communication with the inside of the bus and thus be an opening for circulation air.

In order to limit the noise nuisance towards the inside of the bus, caused by the axial ventilator causing more noise, in this case, preferably, the air inlet opening for circulation air is in communication, during this circulation, with the inlet of the internal channel through an inlet channel forming a sound labyrinth.

In a particular embodiment of the invention, the air channel is provided with both an inlet opening for open air communicating with the outside of the bus and with an inlet opening communicating with the inside of the bus for circulation air.

In all these cases, the air inlet opening or the inlet channel communicating therewith, which puts the air inlet opening in communication with the inlet of the internal channel, can be closeable by means of a valve.

In all these cases the air inlet openings and the inlet channels are only applied locally and an air current in longitudinal direction is only possible in the air channel in which the air outlet openings are applied.

In an efficient embodiment of the invention the axial ventilator is located above the heat exchanger.

The bus can comprise one or more air channels and can comprise for each air channel one or more ventilators mounted next to each other.

In an interesting embodiment of the invention, a filter is mounted between the ventilator and the heat exchanger.

In order to better show the characteristics of the invention, some preferred embodiments of an air-conditioned bus are described hereafter as examples, reference being made to the accompanying drawings, in which:
figure 1 represents a perspective view of a part of the roof with the air channel and components for air-conditioning of an air-conditioned bus according to the invention;
figure 2 represents a cross-section along line II-II in figure 1;
figure 3 represents a cross-section similar to that of figure 2, but relating to an other embodiment of the invention;
figure 4 represents a cross-section similar to that of figures 2 and 3, but relating to yet an other embodiment of the invention.

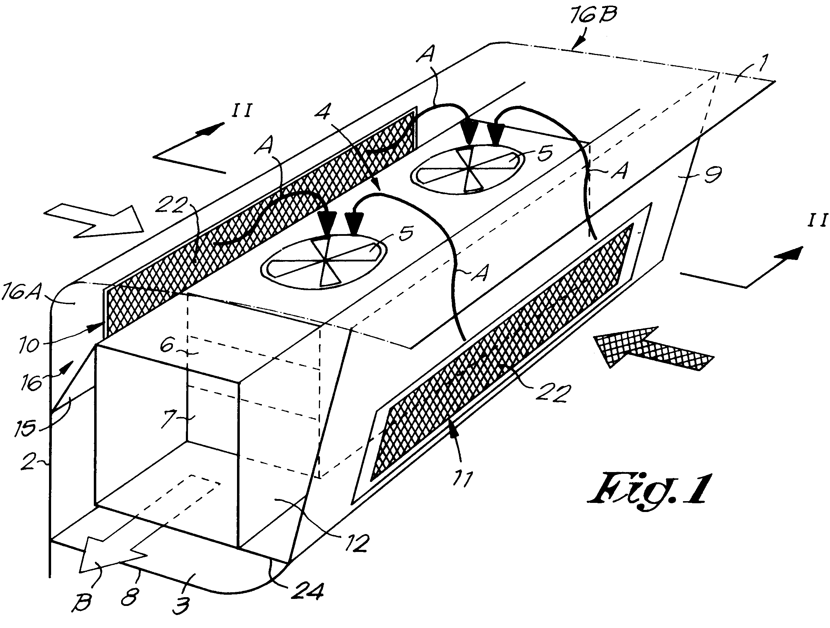

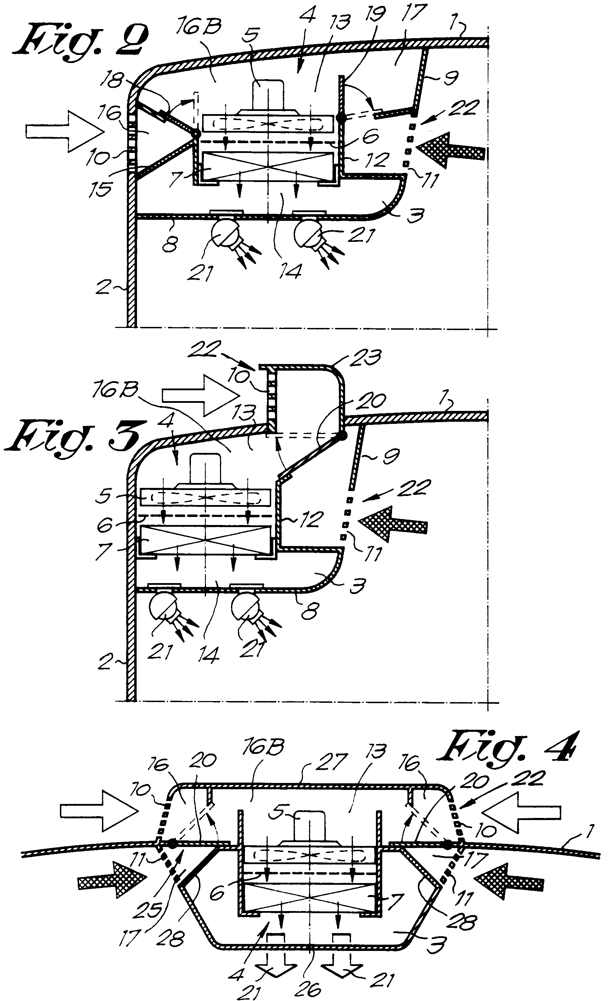

In figures 1 and 2 a part is represented of the superstructure, more specifically a part of the roof 1 and a part of the side wall 2 connecting thereto, of a bus which is for the rest constructed in a known way, which is therefore not further described herein. The bus can be a public transport bus as well as a coach. It is provided with an air-conditioning installation mounted against the roof 1, which installation essentially comprises an air channel 3 and an air-conditioning unit 4 mounted therein. Air-conditioning unit here relates to a space in which one or more ventilators 5, a filter 6 and one or more heat exchangers 7 are mounted.

The air channel 3 extends in the longitudinal direction of the bus, in the corner delimited by the roof 1 and the side wall 2 and is therefore delimited by parts of this roof 1 and this side wall 2 as well as by a horizontal inner wall part 8 and an upright inner wall part 9 connecting thereto.

Opposite the air-conditioning unit 4 this air channel 3 is provided with an inlet opening 10 for open air and of an inlet opening 11 for circulation air from the inside of the bus. Both openings are closed by a grate 22. The inlet opening 10 for open air is applied in the side wall 2, the inlet opening 11 in the inner wall part 9, opposite the bottom of the air-conditioning unit 4. Both openings are sufficiently large and have a length which corresponds more or less with the length of the air-conditioning unit 4.

The air-conditioning unit 4 comprises a housing which forms an upright internal channel 12, thus with an inlet 13 at the top, at a distance from the top of the air channel 3 and an outlet 14 at the bottom, at a distance from the bottom of this air channel 3. Under the air inlet opening 10 a fixed partition 15 connects the side wall of the channel 12 with the outer side wall 2, while under the air inlet opening 11 a fixed partition 24 connects the other side wall of the channel 12 with the inner wall part 9, so that two inlet channels 16 and 17 are formed between the inlet 13 and the openings 10 and 11 respectively. As it concerns one unit, it is clear that the inlet channels 16 and 17 are limited by end walls 16A and 17A in the longitudinal direction of the bus. Each one of these inlet channels can, above the corresponding opening 10 or 11, be closed by an air valve 18 or 19. For clarity's sake, these valves are not represented in figure 1 but in figure 2. The air valves are remotely controllable independently of each other. In open position the valves 18 and 19 form a wall part of the corresponding inlet channel 16 or 17. These valves 18 and 19 and the rest of the inlet channels 16 and 17 can be covered with a noise absorbing material. Especially the inlet channel 17 at the inside of the bus thereby forms a sound labyrinth to limit the sound transfer from the air-conditioning unit 4 to the inside of the bus.

In the internal channel 12, two axial ventilators 12 with a large diameter are mounted at the top. These ventilators 5 are mounted next to each other in the longitudinal direction of the air channel 3, with their axis of rotation directed vertically. These ventilators have a large air delivery at low lifts. The pressure difference over the axial ventilators 5 is for instance 70 to 170 Pa with an air speed of 3 to 8 m/s, whereas the pressure difference in radial ventilators is normally between 200 and 400 Pa with an air speed of 10 to 25 m/s.

Under the axial ventilators 5 a filter 6 is mounted in the channel 12 and at the bottom the heat exchanger 7 is mounted. The filter 6 is largely dimensioned and can treat a large delivery. This filter can consist of several filter elements and comprise for instance electrostatic filter elements. The heat exchanger has a large air flow surface, causing low air speeds, for instance 1 to 2,5 m/s. This allows for a heat exchanger of little thickness and minimal air resistance to be mounted. This heat exchanger comprises in a known way one or more heating elements and/or cooling elements. The construction of such a heat exchanger is within the reach of the skilled workman, and is not described in detail.

Depending on the position of the air valves 18 and 19, the ventilators 5 suck through the inlet channels 16 and 17 only open air, only circulation air from the bus or both open air and circulation air. This air is filtered in the filter 6 and heated or cooled if required in the heat exchanger 7. The conditioned air which leaves the air-conditioning unit 4 through the outlet 14 is separated to the front and to the back in the air channel 13 and led in the inside of the bus through regulable mouth pieces 21 which are mounted in the air channel 3 itself, or through other air channels. It is clear that with the suction only a transversally directed air current exists, as indicated with arrows A in figure 1, so that turbulence resulting from air dispersion in transversal direction is excluded, while only at the bottom in the channel 3 an air current in longitudinal direction, as indicated with arrow B, is realized.

Due to the choice of components for the air-conditioning, especially the unit 4, a compact building-in is possible. However, the components remain easily accessible. Both the fresh open air and the circulation air are filtered. By controlling the air valves 18 and 19 the two air sources can be dosed, so that even under extreme conditions the required capacity of heating and/or cooling can be obtained. The power consumption of the ventilators 5 is relatively limited. The noise nuisance towards the inside of the bus can be limited by the construction. Large air deliveries are possible, so that temperature differences between this inside and the conditioned air are limited. A large air delivery allows a faster ventilation in the case that open air can flow in the air-conditioning unit 4. The air resistance can be kept at a low level by dimensioning the filter and the heat exchanger and by limiting turns in the inlet channels and the air-conditioning unit, in that these are only applied locally.

The embodiment to which figure 3 relates essentially differs from the embodiment described above in that the air inlet opening 10 for open air is located in the roof 1 and in that the outer wall of the internal channel 12 is formed by part of the side wall 2. Moreover, the two air valves in the inlet channels 16 and 17 are replaced by one single alternating valve 20 which in two extreme positions closes one inlet channel and leaves the other one open, and in intermediate positions leaves both inlet channels partially open. Above the air inlet opening 10 a cap 23 connects, in other words a local air absorbing element, and the grate 22 for this opening is mounted in the cap 23.

The functioning and advantages are the same as with the preceding embodiment, with the difference that the dosage of the open air and the circulation air takes place with one single valve 20, and that this configuration allows to build the same components in a narrower air channel.

The embodiment represented in figure 4 essentially differs from the preceding embodiments in that the air channel 3 is not mounted against the side wall 2, the roof 1, but in the middle of the roof 1, in an opening 25 in this roof 1. The air channel 3 is in this case delimited by a lower gutter-shaped wall part 26 under the roof 1 and an upper wall part 27 forming a cap, located above the roof 1.

In the middle of the air channel 3 the same air-conditioning unit 4 as in the first embodiment is mounted, thus with an internal upright channel 12 and therein at the top one or more axial ventilators 5, thereunder a filter 6 and at the bottom one or more heat exchangers 7. The channel 2 is connected at either side to the lower wall part 26 by means of a partition 28.

In the upper wall part 27 two inlet openings 10 for open air are applied, one on either side, while in the lower wall part 26, just under the roof 1 but above the partitions 28, two inlet openings 11 for circulation air are applied, one on either side. In these inlet openings 10 and 11 grates 22 are mounted. At either side an inlet channel 16 for open air 16 between the inlet opening 10 and the inlet 13 above the air-conditioning unit 4 and an inlet channel 17 for circulation air between the inlet opening 11 and this inlet 13 are thus formed, whereby these channels 16 and 17 partially coincide. An alternating valve 20 can, depending on its position, either close the inlet opening 10 or close the inlet opening 11 or partially close both openings. At either side of the air-conditioning unit 4 such an alternating valve 20 is mounted.

As it concerns one unit, the inlet channels 16 and 17 are limited by end walls 16A and 17A, similar to figure 1.

In the preceding embodiments the air valves 18 and 19 or the alternating valve or alternating valves 20, as well as the ventilators 5 and the heat exchanger 7 are remote controllable, for instance by the bus driver. If the air outlet comprises regulable mouth pieces 21, these can be mounted above the seats and can be opened or closed and possibly be directed by the passengers.

The present invention is in no way limited to the embodiments described above and represented in the drawings, but such air-conditioned buses can be realized in different variants without leaving the scope of the invention.

More specifically, a filter need not be present.

Also, the number of ventilators need not be exactly two.

Also, the ventilator need not be located directly above the heat exchanger.

## Claims

**1.-** Air-conditioned bus which comprises at least an air channel (3) mounted against or in the roof (1) and provided with at least an air inlet opening (10, 11) and at least an air outlet opening (21) for leading air to the inside of the bus, which bus comprises in this air channel (3), between the air inlet opening (10, 11) and the air outlet opening (21), at least a ventilator (5) an a heat exchanger (7), characterized in that the bus is equipped with air-conditioning units (4), in other words local installations which allow that locally air is taken away which is then led to the mutual air channel (3) extending in the longitudinal direction of the bus, whereby these local air-conditioning units (4) are formed by a local inlet channel (16, 17) which extends transversally with respect to said air channel (3) , and at least one upright internal channel (12), which connects with its upper extremity to said inlet channel (16, 17) and with its lower extremity to said air channel (3), in which the ventilator (5), which is an axial ventilator, and the heat exchanger (7) are mounted above each other.

**2.-** Air-conditioned bus according to claim 1, characterized in that the inlet channel (16, 17) and the air inlet opening (10, 11) extend essentially over the same distance in the longitudinal direction of the bus, whereby the inlet channel (16, 17) is delimited at the side by end walls (16A, 17A).

**3.-** Air-conditioned bus according to any one of the preceding claims, characterized in that the air inlet opening (10, 11) is an inlet opening (10) for open air.

**4.-** Air-conditioned bus according to the preceding claim, characterized in that this open air inlet opening (10) is applied in the roof (1).

**5.-** Air-conditioned bus according to claim 3, characterized in that the open air inlet opening (10) is applied in the side wall (2).

**6.-** Air-conditioned bus according to any one of the preceding claims, characterized in that the air inlet opening (10, 11) is in communication with the inside of the bus and is thus an opening (11) for circulation air.

**7.-** Air-conditioned bus according to the preceding claim, characterized in that the air inlet opening (11) for circulation air, during the circulation, is in communication with the inlet (13) of the internal channel (12) through an inlet channel (17) forming a sound labyrinth.

**8.-** Air-conditioned bus according to claims 3 and 6, characterized in that the air channel (3) is provided with at least an inlet opening (10) for open air which is in communication with the outside of the bus, as well as with at least an inlet opening (11) for circulation air communicating with the inside of the bus.

**9.-** Air-conditioned bus according to any one of the preceding claims, characterized in that the air inlet opening (10, 11) or the inlet channel (16, 17) communicating therewith, which connects the air inlet opening (10, 11) with the inlet (13) of the internal channel (12), is closeable by a valve (18, 19 or 20).

**10.-** Air-conditioned bus according to claims 8 and 9, characterized in that both the air inlet opening (10) for open air and the air inlet opening (11) for circulation air are in communication with the inlet (13) of the internal channel (12) through an inlet channel (16, 17), and in that in each of the channels an air valve (18, 19 respectively) is mounted.

**11.-** Air-conditioned bus according to claims 8 and 9, characterized in that both the air inlet opening (10) for open air and the air inlet opening (11) for circulation air are in communication with the inlet (13) of the internal channel (12) through an inlet channel (16, 17), and in that a mutual alternating valve (21) can close each one of the inlet channels (16, 17) separately or both inlet channels (16, 17) partially.

**12.-** Air-conditioned bus according to claims 8 and 9, characterized in that the air channel (3) is provided at two opposite sides with an inlet opening (10) for open air and an inlet opening (11) for circulation air.

**13.-** Air-conditioned bus according to the preceding claim, characterized in that the air channel (3) is mounted in an opening (25) in the roof (1) and comprises a lower wall part (26) which is provided under the roof (1) at either side with an inlet opening (11) for circulation air and comprises an upper part (27) which is provided above the roof (1) at either side with an inlet opening (10) for open air.

**14.-** Air-conditioned bus according to claims 11 and 12, characterized in that at either side of the internal channel (12) an alternating valve (20) is mounted for totally or partially closing the inlet openings (10 and 11) at the corresponding side.

**15.-** Air-conditioned bus according to any one of the preceding claims, characterized in that the axial ventilator (5) is located above the heat exchanger (7).

**16.-** Air-conditioned bus according to any one of the preceding claims, characterized in that each air-conditioning unit (4) comprises two axial ventilators (5) which are mounted next to each other.

**17.-** Air-conditioned bus according to any one of the preceding claims, characterized in that a filter (6) is mounted between the ventilator (5) and the heat exchanger (7).

**18.-** Air-conditioned bus according to any one of the preceding claims, characterized in that the pressure difference over the axial ventilator (5) is between 70 and 170 Pa and in that the air speed through the ventilator (5) is between 3 and 8 m/s.

**19.-** Air-conditioned bus according to any one of the preceding claims, characterized in that the heat exchanger has such an air flow surface that the air speed therethrough is between 1 and 2,5 m/s.
